(19) **Europäisches Patentamt**

**European Patent Office**

**Office européen des brevets**

(11) **EP 1 251 113 A2**

(12) **EUROPEAN PATENT APPLICATION**

(43) Date of publication:
**23.10.2002 Bulletin 2002/43**

(51) Int Cl.[7]: **C04B 35/03**

(21) Application number: **02008301.0**

(22) Date of filing: **11.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.04.2001 IT MI010810**

(71) Applicant: **QUARELLA S.p.A.**
**37135 Verona (IT)**

(72) Inventors:
• **Godi, Alessandro**
**37135 Verona (IT)**
• **Tassone, Pierpaolo**
**37135 Verona (IT)**

(74) Representative: **Minoja, Fabrizio, Dr.**
**Bianchetti Bracco Minoja S.r.l.**
**Via Rossini, 8**
**20122 Milano (IT)**

(54) **"Stone agglomerates manufactured in blocks and slabs, consisting of mineral fillers of mixed origin divided into selected, preset grading envelopes, with increased mechanical strength"**

(57) Disclosed are stone agglomerates consisting of fine calcium carbonate powders, silica mineral grit originating from vitreous quartz, orthoclase, albite and biotite, and an unsaturated polyester resin, the silica mineral grit being present in a percentage volume such that its specific surface is approximately one-tenth of that of the calcium carbonate, or less.

## Description

The manufacture of stone agglomerate products destined for the construction industry, to make floorings and wall coverings, or used in the furnishing industry as kitchen and bathroom worktops and the like, is a known technique. These composite materials can be manufactured industrially in the form of tiles, slabs with an area of over 4 square metres and a thickness of 1 to 3 cm, or blocks with a volume of up to 3 cubic metres, which are subsequently sawn into slabs. The choice of geometry of the semi-manufactured product depends on the hardness of the starting raw material, the required appearance of the finished product and the required output of the manufacturing plant.

The starting raw materials are marble or calcareous stone in general, granite, quartz and silica sand, which can be found in nature in large sizes that need to be crushed, or have already been crushed by natural events, divided into suitable grading envelopes, and bound by synthetic polymers (such as unsaturated polyester resin with suitable additives) or Portland cement.

Stone agglomerates are manufactured industrially by means of various forming technologies, which can be performed at atmospheric pressure or under vacuum. The development of manufacturing technology has considerably improved the technical properties and appearance of the products, because highly effective compacting means can be used to form the finished product with a drastic reduction in the proportion of binder to granular filler.

The main forming techniques used in the industrial manufacture of the stone agglomerates to which this invention relates may be summarized as follows:

- compaction by vibration in air
- vibro-compaction under vacuum
- vibro-compressure under vacuum.

The vibration forming technique in air is definitely the oldest technology, and derives from the ready-mixed concrete industry. Slabs of ready-mixed concrete are made with this system all over the world, but the technology has only recently been adopted for the manufacture of materials with decorative functions destined for the building industry. The first development on the air vibration technology was represented by vibro-compaction under vacuum. It derives from the previous technology, but was developed to eliminate air from the interstices between the particles of granulates more effectively, thus reducing the total porosity of the end product. In the technology used to manufacture blocks of agglomerate, the aggregates can be mixed with the binder under vacuum to improve the quality of the end product; this method is particularly useful when the binder is a polyester resin and the resin is used at a high viscosity, with the result that its ability to trap air during mixing is particularly high. Vibro-compaction under vacuum was then superseded by vibro-compressure under vacuum. The combined action of vibration and pressure in the absence of air forces the granules very close together, thus reducing the amount of binder required to fill the gaps between the granules. The absence of air in the process prevents the formation of macroporosity between the aggregates and microporosity in the binder paste. Polyester resin, or alternatively Portland cement, can be used as binder, sometimes modified by the addition of special admixtures. Depending on the type of manufacturing plant, the initial mixing stage can once again be carried out in air or under vacuum.

In all the forming techniques described above, it is essential to use compatible raw materials to manufacture the agglomerates in order to "design" products with particular appearance and technical characteristics.

In this respect, the agglomerates can be technically described as composite materials, as they originate from the combination of two different elements: stone material (granulate) and binder. If appearance is not taken into account, agglomerate products can be classified first of all on the basis of the quality or type of stone granulate used, ie. whether they mainly consist of calcium carbonate (marble or calcareous stones) or silica (granite, quartz or silica sand).

The granulate influences a number of physical, chemical and mechanical characteristics of the finished product, such as the degree of water absorption, abrasion resistance and chemical resistance.

A second classification of agglomerate products could be based on the grade scale of the granulates in the end product, and especially on their maximum size. This is because the binder used, especially its quantity in the end product, mainly depends on the maximum diameter of the granulate (in general, the greater the maximum diameter of the granulate, the lower the binder content, and vice versa), and this influences other characteristics, such as the flexural strength and linear thermal expansion coefficient.

The use of mineral fillers of silica origin bound by unsaturated polyester resin to manufacture stone agglomerates with physical and mechanical characteristics superior to those in which the raw material consists of calcium carbonate fillers was initially hindered by adhesion problems between filler and resin, which limited the industrial development of this composite. Such development was only made possible later by the introduction of adhesion promoters.

The main adhesion promoters are organofunctional silanes; these are silicon derivates which, by increasing the adhesion between organic polymer matrices and compatible inorganic fillers, considerably improve the mechanical properties of the various composite materials. The more effective the adhesion between the individual components, the better the mechanical properties of a composite material will obviously be. In the case of agglomerates, for example, the "wettability" of the fillers (namely powders plus granulates) by the matrix (organic phase) is used to define the degree of adhesion of the resin to the inorganic parts. If the resin "wets" the filler, this means that the powders and granulates will be effectively coated by the organic matrix, which will surround them to form a single body of greater or lesser strength, depending on the quality of the contact.

The wettability of some inorganic materials increases drastically on addition of silanes, which act as adhesion promoters.

It is consequently logical to assume that a good composite material cannot be obtained merely by mixing two or more components; it is also essential to ensure that good compatibility or adhesion exists between the various components. The greatest compatibility and adhesion problems arise when inorganic products of mineral origin, which are usually polar and hydrophilic, are combined with organic matrices which have the opposite characteristics. Adhesion promoters were developed to solve these problems; they are basically surface modifiers, namely substances with such a structure and characteristics that they modify the surfaces of both components of the composite. These products have a basically bipolar structure, one pole being compatible with the matrix and the other with the filler.

Adhesion promoters should not be confused with the numerous varieties of polymer-type binders which, for example, are the basic component of adhesives; these binders act on the filler surface with physical mechanisms by forming a film which, though very thin, is still a few microns thick.

In the case of adhesion promoters, however, molecular bridges are formed (which have atomic dimensions, and are therefore measurable in nanometers), and the bonding mechanism is mainly chemical.

The major adhesion promoters are represented by a group of organic derivatives of silicon called organofunctional silanes. Their general formula is:

$$X - (CH_2)_y - Si \equiv (OR)_3$$

where:

X = functional organic group able to bind the groups present on the polyester resin;
Y = 2-6, preferably 3;
R = $(C_1-C_4)$ alkyl group, preferably methyl.

Examples of X groups are vinyl and acrylic groups, and the like.

The used organo-silicon compounds have both an organic and inorganic character, respectively connected to the groups X and Si-OR, the latter being hydrolized to Si-(OH) groups which may react with inorganic components.

The silanes are excellent adhesion promoters in binary systems consisting of organic polymers, such as thermosetting resins and silica materials. As reported in the specific literature, their efficiency on inorganic substrates with a different chemical nature differs according to a scale of values which positions calcium carbonate among the least compatible materials.

Various theories have been advanced as to the mechanism whereby the silanes increase the adhesion between the matrix and the filler, or more generally between the organic component and the inorganic substrate. The "chemical bridge" theory assumes that the silane forms a bond with both components of the binary system. To understand how this can happen, it should be borne in mind that silanol groups which have their own reactivity, and in particular can react with the other silanol groups of a silane to form siloxane bonds, always exist on siliceous surfaces, although they are distributed at random. The bond formed with the other interface is even easier to explain; this bond can form because the polymer phase has its own reactivity due to the presence of reactive groups in the polymer chain.

In order to form the bond, the reactivity of the silane selected must be "functional", ie. complementary with that of the polymer.

The chemical bridge is formed in three successive stages. At the first stage, hydrolysis of the alkoxy groups bonded to the silicon takes place. As a result of the weakly acid environment, the silane reacts with fast kinetics with minimal amounts of water, in some cases only using the water present on the filler surface. At the second stage, the hydrolysed silane reacts with the silanol groups on the silica surface to form siloxane bridges between the silane molecules: this gives rise to a silicon layer which makes the siliceous surface organic to some extent. At the third stage, a reaction takes place between the functional group present in the silane and the organic polymer which leads to complete formation of the chemical bridge. In order for this to happen, the -X group must be chemically reactive with the polymer, with which it produces an ion or radical condensation or addition reaction.

To analyse the problem from the mechanical standpoint, three distinct regions can be identified in binary composite systems (ie. those consisting of two components). The first is the inorganic substrate, consisting of substances which have a higher modulus of deformation than the organic component (namely substances in which a very high level of stress has to be applied before deformation occurs), and greater rigidity. The second region is represented by the organic matrix, constituted by substances which have a low modulus of deformation (ie. are easily deformable) and are far less rigid. Between these two regions there is the interface or boundary layer, where the adhesion promoter can be present, which possesses intermediate characteristics. In view of its low modulus of deformation and continuous structure, the organic matrix transfers and redistributes loads and strains onto the inorganic substrate. This evidently involves the boundary layer; it has been demonstrated that once the two organic and inorganic components have been established, the characteristics of the composite can be improved by modifying the boundary layer (e.g. by adding adhesion promoter in the case of silica-based agglomerates, such as granite, quartz and sand). A boundary layer suitable for the preparation of a good composite must have certain characteristics: it must be strongly bonded to the inorganic substrate, it must "wet" the organic matrix, and finally, its modulus and rigidity must be at an intermediate level between those of the other regions. This latter result is achieved by using a suitable adhesion promoter which, by performing a cross-linking action, increases the modulus of deformation and rigidity of the polymer in proximity to the inorganic component.

The above factors have led to the definition of two common types of stone agglomerate products, which are clearly recognised by end users:

- agglomerates consisting of a binder (usually an unsaturated polyester resin) and calcium carbonate fillers (originating from marble or calcareous stone that can be polished to a greater or lesser extent) which can be manufactured in slabs, or alternatively in blocks that can easily be sawn into slabs in view of the very low Mohs hardness (between 3 and 4) of the starting raw materials;

- agglomerates consisting of a binder (usually unsaturated polyester resin), an adhesion promoter (an organofunctional silane) and fillers of silica origin (deriving from granite, quartz or silica sand), which are manufactured in slabs in view of the high Mohs hardness (between 6 and 8) of the starting raw materials, which in practice makes it uneconomical and very difficult to cut the blocks into slabs.

According to the invention, it has surprisingly been found that industrial manufacture of a third type of stone agglomerate products with very interesting and innovative technical characteristics and appearance is both possible and cost-effective. This third type of product consists of a binder (usually an unsaturated polyester resin), an adhesion promoter (an organofunctional silane) and fillers of mixed origin (deriving from calcium carbonate and silica), provided that the fillers are proportioned and dimensioned in accordance with particular conditions.

As already mentioned, in order for the adhesion promoter to form the chemical bridge between binder and filler, the reaction must take place in a "compatible" environment, ie. one which is sufficiently acid to allow the formation of silanol groups which will react with the filler. This weakly acid environment is provided by the chemical nature of the mineral filler of silica origin. Conversely, organofunctional silane of the type described will not react with a mineral filler of carbonate origin, because the polar structure of calcium carbonate is unsuitable for the formation of a covalent bond between silica, oxygen and calcium, and does not present the necessary favourable acid environment.

For this reason, the use of calcium carbonate and silica fillers and granulates in the same mixture suitable for the manufacture of a stone agglomerate product has never been considered particularly interesting, although the resulting end product could have had some very innovative, interesting characteristics in terms of its mechanical and chemical resistance, for example, in view of the synergic presence of the two mineral fillers of different natures.

In fact, if calcium carbonate and silica fillers and granulates are used in the same mixture, and granite, quartz or silica sand grit is present as fillers of larger dimensions (expressed as the mean particle diameter), in a percentage volumetric fraction such that its specific surface is approximately one-tenth of the total or less, while calcium carbonate only constitutes the smaller granulometric fraction, namely the finer powder, and if the optimum bond with the polymer binder is obtained (possibly with the aid of a suitable adhesion promoter), the mechanical properties of the end product in terms of flexural strength and chemical resistance will be superior to those of conventional agglomerates made solely with calcium carbonate fillers.

Moreover, the modulus of elasticity and abrasion resistance of a composite thus constituted (namely on the basis of mineral fillers of mixed origin) enable the product to be manufactured in blocks, because the subsequent stage of cutting into slabs is facilitated by the partial presence of the calcium carbonate fillers, which on the other hand do not involve higher deterioration in terms of physical and mechanical strength than an agglomerate constituted by fillers of silica origin only.

This can be explained by experimental determination of the Brinnel hardness of the composite material of the present invention, which shows intermediate values between those of an agglomerate consisting solely of calcium carbonate fillers and those of an agglomerate consisting solely of silica fillers, while the flexural strength and abrasion resistance of the end product will be practically identical to those of an agglomerate consisting of silica fillers only.

It has been established, and it is an integral part of this invention, that this result can be obtained when:

1. the mineral fillers of silica origin present in a mixture suitable for the manufacture of a stone agglomerate product are of larger dimensions and present in a percentage volume such that their specific surface is approximately one-tenth of that of mineral fillers of carbonate origin, or less;

2. said fillers of silica origin have special chemical and mineralogical characteristics: they mainly originate from intrusive magmatic rocks with sialic composition, a medium-coarse grain and a porphyric tendency, with the holocrystalline texture consisting of vitreous quartz, orthoclase, albite and biotite.

Moreover, it has been found that the existence of a chemical bond between the fillers responsible for the mechanical resistance of the end product and the organic binder is preferable; this bond is guaranteed by the functional presence of a suitable adhesion promoter of the type described above, in a proportion typically ranging between 0.1 and 1.0% of the weight of the resin.

The penetration of a liquid (P), in this case an unsaturated polyester resin added with a suitable adhesion promoter, into a porous medium such as the mixture required to form the agglomerate, during mixing, can be interpreted by the Washburn equation, which describes the movement of a fluid in a capillary tube:

$$P = -2\gamma \cos \varphi / R$$

where:

$\gamma$ = surface tension of liquid
$\varphi$= angle of contact between liquid and solid
R= radius of capillary tube.

This equation can be modified in such a way that penetration P is replaced with a parameter 1 corresponding to the depth of penetration of the liquid in the capillary tube, and time t and fluid viscosity $\eta$ are taken into consideration. Moreover, in the case of a system of packed solid particles, radius R of the capillary tube can be replaced with a dimension factor K which takes account of the actual radius of the packed system, and introduces a tortuosity factor that considers the complex trajectory formed by the porosity between the packed particles:

$$1 = (K t \gamma \cos \varphi / 2 \eta)^{0.5}$$

In a porous medium constituted by fine powder and grit of larger size which is wet by a fluid, such as a resin with additives, of viscosity $\eta$, it can be assumed (at least as a first approximation) that $\gamma$ and $\varphi$ are constant and the depth of penetration of the liquid between the interstices of the particles therefore depends solely on K and t, namely on the shape and size of said interstices and the contact time. In view of the fact that large grit particles (deemed to be spherical for convenience of calculation) can have a diameter 2 to 100 times greater than that of fine powders, the size of the gaps between the particles will be larger than the gaps between fine powder particles by the same order of magnitude. Time being equal, larger diameters will therefore correspond to greater penetration depth, with the result that grit can be wet more than powder. At the start of mixing, if "mixing efficiency" is taken as 1, it will be easier to wet large grit particles than fine powders, which will only later (when the fluid is forced into the gaps) be completely wet between particles.

If the reactive sites for silane (silanol groups) are only present on the surface of the larger grit because the fine powder is constituted by calcium carbonate (which is practically inert), the silane present in the resin will easily be "captured" by the large grit particles, and can therefore only react quantitatively with them, because the fine powder is inert to this reaction.

If it is assumed that the flexural strength of the material complies with Griffith's law of the "critical defect", it is possible to understand the ideal flexural strength values will only be reached after all the interfaces between the large particles have been "sealed", even if the small particles (the fine powders and smaller grit particles) are not chemically bonded to the resin by the adhesion promoter.

To recapitulate, the results described in the present invention were made possible by the experimental finding that:

-   the mechanical strength of the end product depends mainly on the presence of interfaces between the binding matrix and the largest grit particles which are "sealed" to a greater or lesser extent ("critical defect" theory);
-   during the mixing stage, the resin with added silane tends to wet the large grit particles first, and the fine powder particles later, thus enabling the silane to react immediately with the silanol groups on the surface of the large grit particles.

The percentage composition of a mixture consisting of mixed fillers which is suitable for the manufacture of stone agglomerates in slabs or blocks, curable by cross-linking the unsaturated polyester resin either at ambient temperature or hot (by inserting it into suitable thermostating ovens) depending on the type of peroxide used as reaction initiator, is shown below by way of example:

-   unsaturated polyester resin with additives 15-20%
-   fine calcium carbonate powder 30-50%
-   grit consisting of fillers of silica origin 30-50%

Said mixture will preferably consist of:

-   unsaturated polyester resin with additives 17-19%
-   fine powder 25-30%
-   medium-fine powder 15-25%
-   coarse powder 30-40%
-   organic peroxide or mixture of organic peroxides 0.20-0.50%
-   reaction accelerator (such as cobalt salts) 0.02-0.05%
- adhesion promoter (organofunctional silane) 0.02-0.20%
- colouring oxides or colouring pastes /

An end product with the above composition would have the following physical and mechanical characteristics:

- volume weight (density)     2.44-2.48 kg/l
- flexural strength     36 - 44 MPa
- water absorption     0.02-0.06%
- abrasion resistance     205-275 mm$^3$

## Claims

1. Stone agglomerates consisting of fine calcium carbonate powders, silica mineral grit originating from vitreous quartz, orthoclase, albite and biotite, and an unsaturated polyester resin, the silica mineral grit being present in a percentage volume such that its specific surface is approximately one-tenth of that of the calcium carbonate, or less.

2. Agglomerates as claimed in claim 1, in which an organofunctional silane is added to the unsaturated polyester resin.

3. Agglomerates as claimed in claim 1 or 2, in which the mean diameter of the silica mineral grit is 2 to 100 times greater, and preferably 10 to 100 times greater, than the mean diameter of the calcium carbonate powder.

4. Agglomerates as claimed in any one of claims 1 to 3, consisting of 30-50% calcium carbonate, 30-50% silica mineral and 15-20% unsaturated polyester resin with additives.

5. Agglomerates as claimed in claim 4, consisting of 25-30% calcium carbonate, 30-40% silica mineral, 17-19% unsaturated polyester resin with additives, and 15-25% powders with an intermediate particle size between those of silica minerals and carbonates.

6. Agglomerates as claimed in any one of claims 2 to 4, in which the organofunctional silane is a silane with the formula:

$$X\text{-}(CH_2)_y\text{-}Si\text{-}(OR)_3$$

in which R is a $(C_1\text{-}C_4)$ alkyl group, y is an integer between 2 and 6, preferably 3, and X is a functional group able to bind groups present on the polyester resin.

7. Agglomerates as claimed in claims 1 to 6, in which the organofunctional silane is present in a concentration ranging between 0.1 and 1.0% on the unsaturated polyester resin weight.

8. Agglomerates as claimed in claims 1 to 7, obtainable by vibro-compaction or vibro-compressure under vacuum, which can be cured chemically (by cross-linking the polyester resin at ambient temperature) or thermally (by using suitable cross-linking initiators).

9. Agglomerates as claimed in any one of claims 1 to 8, having the following characteristics:

| volume weight (density) | 2.44-2.48 kg/l |
|---|---|
| flexural strength | 36 - 44 MPa |
| water absorption | 0.02-0.06% |
| abrasion resistance | 205-275 mm$^3$ |